# EUROPÄISCHE PATENTSCHRIFT

(11) **EP 2 019 075 B1**
(45) Veröffentlichungstag und Bekanntmachung des Hinweises auf die Patenterteilung: **15.10.2014**
(21) Anmeldenummer: 08013054.5
(22) Anmeldetag: 19.07.2008
(51) Int. Cl.: B66C 1/02, B66C 1/04, B25J 15/06, B65G 47/91, B65H 3/08

(54) **Vorrichtung zum Spannen und/oder Halten von Werkstücken**
Device for tensioning and/or holding workpieces
Dispositif destiné au serrage et/ou au maintien de pièces à usiner

(30) Priorität: 24.07.2007 DE 102007034490
(43) Veröffentlichungstag der Anmeldung: 28.01.2009
(73) Patentinhaber: J. Schmalz GmbH, 72293 Glatten (DE)
(72) Erfinder: Vogel, Klaus, 02681 Kirschau-Rodewitz (DE)
(74) Vertreter: DREISS Patentanwälte PartG mbB

(56) Entgegenhaltungen:
- EP-A1- 1 541 255
- EP-A2- 0 425 960
- EP-A2- 1 752 264
- WO-A1-2005/095254
- DE-A1- 1 949 065
- DE-U1- 20 115 549
- DATABASE WPI Section PQ, Week 199134 Thomson Scientific, London, GB; Class Q36, AN 1991-251064 XP002507427 & SU 1 597 337 A1 (IVANOV VIKTOR A [SU]) 7. Oktober 1990 (1990-10-07)
- DATABASE WPI Section PQ, Week 197524 Thomson Scientific, London, GB; Class Q38, AN 1975-G2965W XP002507428 & SU 438 600 A1 (PRODMASH CONS BUR) 5. August 1974 (1974-08-05)

## Beschreibung

Die Erfindung betrifft eine Vorrichtung zum Spannen und/oder Heben von Werkstücken mit einem geschlossenen Gehäuse, einem im Gehäuse verschieblich gelagerten Kolben, einem ersten, von der einen Stirnfläche des Kolbens und der Gehäusewand begrenzten Druckraum und einem zweiten, von der anderen Stirnfläche des Kolbens und der Gehäusewand begrenzten Pneumatikraum, wobei das Gehäuse an seiner dem Werkstück zugewandten Seite eine einen Saugraum umgrenzende Dichtlippe aufweist und der Saugraum mit dem Pneumatikraum über einen Strömungskanal verbunden ist und wobei ein mittels Druckluft betriebener Unterdruckerzeuger innerhalb des Gehäuses angeordnet ist.

Aus der EP 1 541 255 A1 ist eine Vorrichtung bekannt, mit der Werkstücke, insbesondere plattenförmige Werkstücke, angesaugt werden können. Hierfür wird die Vorrichtung auf die Oberseite des Werkstücks aufgesetzt und an der Vorrichtung wird ein Unterdruck angelegt. Die auf dem Werkstück aufsitzende Seite der Vorrichtung weist eine Dichtlippe auf, die einen Saugraum umgrenzt, an welchem ein Unterdruck angelegt werden kann. Auf diese Weise wird das Werkstück angesaugt. Außerdem ist im Gehäuse der Vorrichtung ein Kolben verschieblich gelagert, in welchen ein Magnet integriert ist. Beim Ansaugen des Werkstücks wird zusätzlich der Kolben in Richtung des Werkstücks verschoben, so dass das Werkstück nicht nur mittels Unterdruck, sondern auch mittels der Magnetkraft des Magneten gehalten wird, falls das Werkstück aus einem ferromagnetischen Material besteht. Das Werkstück kann nun mittels der Vorrichtung angehoben werden. Zum Lösen des Werkstücks wird der Saugraum belüftet, indem an den Unterdruckanschluss der Vorrichtung ein Überdruck angelegt wird. Dadurch wird auch der Kolben innerhalb des Gehäuses verschoben und vom Werkstück entfernt, so dass die magnetische Haltekraft aufgehoben wird.

Zum Betreiben dieser Vorrichtung bedarf es nicht nur einer Unterdruckleitung zum Versorgen der Vorrichtung mit Unterdruck, sondern auch einer Überdruckleitung, mit der die Vorrichtung wieder belüftet und der Kolben in die Ausgangslage zurückverschoben werden kann. Es müssen also Systeme für Unterdruck und Systeme für Überdruck bereitgestellt werden. Dies bedeutet aber, dass Unterdruck- und Überdruckleitungen verlegt werden müssen, dass eventuell Unterdruckquellen oder Kompressoren zur Verfügung gestellt werden müssen und dass diese Einrichtungen zu den vorhandenen Einrichtungen noch hinzugefügt werden müssen. Eine Nachrüstung an bestehende Anlagen ist daher nicht oder nur mit aufwändigen Umbauarbeiten möglich.

Aus der EP-A-0 425 960 und aus der DE-U-201 15 549 ist jeweils eine Vorrichtung bekannt, bei der der Unterdruckerzeuger im Gehäuse angeordnet ist. Jedoch besteht bei diesen Vorrichtungen das Problem, dass die Werkstücke eine porenfreie Oberfläche aufweisen müssen, so dass sie mit Sicherheit angesaugt und festgehalten werden können, da sie mittels eines Stößels ergriffen werden.

Der Erfindung liegt daher die Aufgabe zugrunde, eine Vorrichtung zum Spannen und/oder Heben von Werkstücken bereitzustellen, welche geringere Anforderungen an die vorhandenen pneumatischen Systeme stellt und/oder Werkstücke gespannt oder angehoben werden können, die für Vakuumspann- und -greifsysteme ungeeignete Oberflächen aufweisen.

Diese Aufgabe wird mit einer Vorrichtung zum Spannen und/oder Heben von Werkstücken gelöst, die die Merkmale des Anspruchs 1 aufweist.

Der wesentliche Vorteil der Erfindung besteht darin, dass außerhalb des Gehäuses kein Unterdruckerzeuger benötigt wird, weshalb die Vorrichtung kleinere Dimensionen aufweist, als vergleichbare bekannte Vorrichtungen. Die erfindungsgemäße Vorrichtung muss lediglich mit einer Druckluftleitung verbunden werden und benötigt keine Unterdruckquelle und somit auch keinen Unterdruckanschluss. Druckluftleitungen sind gang und gäbe und Druckluft wird genauso wie elektrische Energie an nahezu jeder Bearbeitungsmaschine benötigt, so dass Druckluftleitungen nicht extra noch verlegt werden müssen. Ein Abgriff von Druckluft ist daher problemlos möglich.

Der zum Ansaugen des Werkstücks erforderliche Unterdruck wird mit dem im Kolben integrierten beziehungsweise am Kolben vorgesehenen Unterdruckerzeuger erzeugt und vor Ort bereitgestellt. Es entfallen also alle zum Führen des Unterdrucks erforderlichen Leitungen und somit auch Risiken, wie Undichtigkeiten und dergleichen. Ein großer Vorteil besteht darin, dass die erfindungsgemäße Vorrichtung problemlos nachgerüstet werden kann, da kein separater Vakuumerzeuger notwendig ist, sondern lediglich ein Anschluss an vorhandene Druckluftleitungen. Dies hat aber auch eine kompakte Bauweise der erfindungsgemäßen Vorrichtung zur Folge, da lediglich die bereits vorhandene Druckluft an die Vorrichtung herangeführt werden muss.

Bei einer Weiterbildung der Erfindung ist vorgesehen, dass der Kolben einen Magneten trägt, der entweder in den Kolben integriert ist oder auf der dem Saugraum zugewandten Seite des Kolbens angeordnet ist. Mit diesem Magneten wird der wesentliche Vorteil erzielt, dass das Werkstück, sofern es ferromagnetisches Material enthält oder aus diesem besteht, nicht nur angesaugt wird, sondern auch magnetisch angezogen wird, so dass auch poröse Werkstücke, z.B. Lochbleche oder Bleche mit geriffelter Oberfläche, welche mittels Unterdruck nur schwer greifbar sind, gehalten werden können.

Um nicht nur den Kolben innerhalb des Gehäuses bewegen sondern auch das Werkstück an die erfindungsgemäße Vorrichtung ansaugen zu können, ist der Sauganschluss des Unterdruckerzeugers mit dem Pneumatikraum verbunden. Auf diese Weise wird die Luft sowohl aus dem Pneumatikraum (zur Verlagerung des Kolbens) als auch aus dem Saugraum (zum Ansaugen des Werkstücks) abgesaugt.

Bei einer Weiterbildung ist vorgesehen, dass der Druckanschluss des Unterdruckerzeugers mit dem Druckraum verbunden ist. Durch diese einfache Maßnahme kann der Kolben innerhalb des Gehäuses mittels Überdruck verschoben und in Richtung des anzusaugenden Werkstücks bewegt werden.

Der Abluftanschluss des Unterdruckerzeugers ist mit einem in der Gehäusewand vorgesehenen Entlüftungsanschluss verbindbar. Sobald diese Verbindung hergestellt ist, kann mit dem Unterdruckerzeuger Unterdruck erzeugt werden. Dabei wird die den Unterdruckerzeuger verlassende Druckluft zusammen mit der vom Unterdruckerzeuger angesaugten Luft über den Entlüftungsanschluss aus dem Gehäuse und somit aus der Vorrichtung ausgeblasen.

Wird der Kolben innerhalb des Gehäuses derart verschoben, dass die Verbindung zwischen dem Abluftanschluss und Entlüftungsanschluss getrennt wird, wird der Unterdruckerzeuger stillgesetzt. Es wird dann kein Unterdruck erzeugt.

Die Verschiebung des Kolbens im Gehäuse zurück in die distale, inaktive Ausgangsstellung erfolgt dadurch, dass der Entlüftungsanschluss mit Druckluft beaufschlagt wird, so dass diese Druckluft den Unterdruckerzeuger über den Abluftanschluss sowie den Sauganschluss durchströmt und dadurch der Pneumatikraum der Vorrichtung mit Druckluft versorgt wird. Zum einen wird dadurch der im Pneumatikraum herrschende Unterdruck abgebaut, zum anderen strömt die Druckluft über den Strömungskanal in den Saugraum, so dass auch dort der Unterdruck aufgehoben wird. Es erfolgt ein Abblasvorgang, der das Lösen des Werkstücks von der erfindungsgemäßen Vorrichtung erleichtert.

Bei einer bevorzugten Variante ist vorgesehen, dass die Verbindungen von im Kolben vorgesehenen Kanälen oder Bohrungen gebildet werden. Diese Kanäle dienen zum einen der Leitung von Druckluft und Unterdruck, zum anderen der Aufnahme des Unterdruckerzeugers, der insbesondere von einem Ejektor und somit von einer Treibdüse sowie einer Empfängerdüse gebildet wird. Diese Bauteile können auf einfache Weise in entsprechende Kanäle eingeschoben und dort pneumatisch dicht fixiert werden.

Bevorzugt weist der Kolben wenigstens eine Radialdichtung und/oder auf seiner dem Saugraum zugewandten Stirnfläche eine Axialdichtung auf. Mittels der Radialdichtung wird der Druckraum vom Pneumatikraum getrennt und mittels der Axialdichtung wird zusätzlich eine Abdichtung dieser beiden Räume geschaffen, wenn der Kolben seine Arbeitsstellung einnimmt.

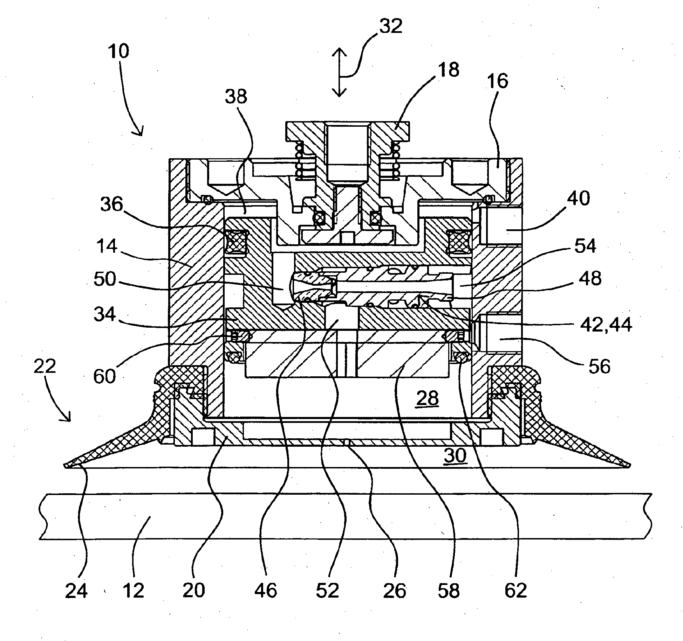

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

Die Zeichnung zeigt einen Längsschnitt durch ein besonders bevorzugtes Ausführungsbeispiel der erfindungsgemäßen Vorrichtung 10, die in der dargestellten Ausführungsform als Greifvorrichtung, insbesondere als Magnetsauggreifer, verwendet wird. Mit der Vorrichtung 10 kann zum Beispiel ein Werkstück 12, welches sich unterhalb der Vorrichtung 10 befindet, ergriffen und gehandhabt werden.

Die Vorrichtung 10 besitzt ein insgesamt mit 14 bezeichnetes Gehäuse, welches an seiner Oberseite von einem eingeschraubten Deckel 16 verschlossen ist. Zentral am Deckel 16 befindet sich eine Aufnahme 18, über welche die Vorrichtung 10 zum Beispiel mit einem (nicht dargestellten) Roboterarm verbunden werden kann. Die Aufnahme 18 ist zum Beispiel eine Schnellspannkupplung.

Die Unterseite des Gehäuses 18 wird von einem Boden 20 verschlossen, der ebenfalls aufgeschraubt ist und der eine radial abstehende und in Richtung des Werkstücks 12 vorstehende Dichtung 22 mit Dichtlippe 24 trägt. Der Boden 20 ist mit einem als zentrale Bohrung ausgeführten Strömungskanal 26 versehen, der einen Pneumatikraum 28 innerhalb des Gehäuses 14 mit einem externen Saugraum 30, der von der Dichtung 22 begrenzt wird, verbindet.

Innerhalb des Gehäuses 14 befindet sich ein in Richtung des Doppelpfeils 32 verschieblich gelagerter Kolben 34, der gegenüber der Innenumfangsfläche des Gehäuses 14 mittels einer Dichtung 36 abgedichtet ist. Zwischen dem Kolben 34 und dem Deckel 16 wird ein Druckraum 38 gebildet, in welchen ein in der Gehäuseumfangswand sich befindender Druckluftanschluss 40 mündet. Dieser Druckluftanschluss 40 könnte auch im Deckel 16 angeordnet sein.

Innerhalb des Kolbens 34 befindet sich ein als Ejektor 42 ausgebildeter Unterdruckerzeuger 44, der von einer Treibdüse 46 und einer Empfängerdüse 48 aufgebaut wird. Die Treibdüse 46 mündet an ihrem Eingang in einen Strömungskanal 50, der vom Druckraum 38 abzweigt. Zwischen der Treibdüse 46 und der Empfängerdüse 48 mündet ein Strömungskanal 52 ein, der mit dem Pneumatikraum 28 in Strömungsverbindung steht. Schließlich ist der Kolben 34 in radialer Richtung über einen Strömungskanal 54 offen, der bei in Arbeitsstellung sich befindendem Kolben 34, wenn der Kolben 34 also in seiner unteren Stellung sich befindet, mit einem weiteren, in der Gehäuseumfangswand sich befindenden Druckluftanschluss 56 in Verbindung steht. In diesen Strömungskanal 54 mündet die Empfängerdüse 48 aus.

Weiterhin ist erkennbar, dass die Unterseite des Kolbens 34 mit einem Magneten 58 bestückt ist, durch welchen der Strömungskanal 52 hindurchführt und der über eine geeignete Klemmvorrichtung 60 (Madenschrauben) mit dem Kolben 34 verbunden ist. Der Magnet 58 ragt in Richtung des Bodens 20 und somit in Richtung des Werkstücks 12 vom Kolben 34 ab. Im Bereich des Kolbens 34 ist der Boden 20 ausgespart und dünnwandig ausgebildet, so dass der Magnet 58 möglichst nahe zum Werkstück 12 zu liegen kommt.

Wird am Druckluftanschluss 40 ein Überdruck angelegt, vergrößert sich der Druckraum 38 indem der Kolben 34 innerhalb des Gehäuses 14 in Richtung des Werkstücks 12 verschoben wird. Die im Pneumatikraum 28 sich befindende Luft verlässt diesen über den Strömungskanal 52. Sobald zwischen dem Strömungskanal 54 und dem Druckluftanschluss 56 eine Verbindung besteht, wird der Ejektor 42 von Druckluft durchströmt, die am Druckluftanschluss 56 ins Freie austritt. Dadurch saugt der Ejektor 42 Luft über den Strömungskanal 52 an und legt an den Pneumatikraum 28 einen Unterdruck an. Über den Strömungskanal 26 wird aber auch der Saugraum 30 evakuiert, wodurch das Werkstück 12 an die Vorrichtung 10 angesaugt wird. Mit der Verschiebung des Kolbens 34 innerhalb des Gehäuses 14 wird auch der Magnet 58 dem Werkstück angenähert und es wird die Dichtlippe 24 der Dichtung 22 verformt, so dass der Boden 20 auf der Oberseite des Werkstücks 12 aufsitzt. Sofern das Werkstück 12 ferromagnetisches Material enthält oder aus diesem besteht, wirken zusätzlich zu den Saugkräften auch magnetische Kräfte auf das Werkstück 12 ein. Das Werkstück 12 wird also sowohl mittels Unterdruck als auch über die magnetischen Kräfte gehalten.

Eine optimale Abdichtung des Kolbens 34 innerhalb des Gehäuses 14 wird zusätzlich noch dadurch erhöht, dass eine axial angeordnete Dichtung 62 an der Unterseite des Kolbens 34 auf der Innenseite des Bodens 20 aufsitzt.

Befindet sich der Kolben 34 in der (in der Zeichnung nicht dargestellten) unteren Position, wird ein ferromagnetisches Werkstück 12 auf jeden Fall über die Kräfte des Magneten 58 gehalten, so dass die Druckluftzufuhr abgeschaltet werden kann. Die Vorrichtung 10 benötigt in diesem Falle keine Energie.

Zum Lösen des Werkstücks 12 wird der Druckluftanschluss 40 ins Freie geöffnet und es wird an den Druckluftanschluss 56 Druckluft angelegt, die über den fluchtenden Strömungskanal 54, die Empfängerdüse 48 und den Strömungskanal 52 in den Pneumatikraum 28 und über den Strömungskanal 26 in den Saugraum 30 geleitet wird. Auf diese Weise bläst die Vorrichtung 10 ab, wodurch der Unterdruck im Pneumatikraum 28 und im Saugraum 30 abgebaut wird. Der Kolben 34 wird dann bis in die in der Zeichnung dargestellte inaktive Position angehoben. Die im Druckraum 38 sich befindende Luft wird über den Druckanschluss 40 ins Freie abgeblasen.

Die erfindungsgemäße Vorrichtung 10 kann ausschließlich mit Druckluft betrieben werden, wobei ein ferromagnetisches Werkstück 12 sowohl mittels Unterdruck als auch mittels Magnetkraft gegriffen und festgehalten werden kann.

## Patentansprüche

1. Vorrichtung zum Spannen und/oder Heben von Werkstücken (12) mit einem geschlossenen Gehäuse (14), einem im Gehäuse (14) verschieblich gelagerten Kolben (34), einem ersten, von der einen Stirnfläche des Kolbens (34) und der Gehäusewand begrenzten Druckraum (38) und einem zweiten, von der anderen Stirnfläche des Kolbens (34) und der Gehäusewand begrenzten Pneumatikraum (28), wobei das Gehäuse (14) an seiner dem Werkstück (12) zugewandten Seite eine einen Saugraum (30) umgrenzende Dichtlippe (24) aufweist und der Saugraum (30) mit dem Pneumatikraum (28) über einen Strömungskanal (26) verbunden ist und wobei ein mittels Druckluft betriebener Unterdruckerzeuger (44) innerhalb des Gehäuses (14) angeordnet ist, **dadurch gekennzeichnet, dass** der Unterdruckerzeuger (44) im Kolben (34) integriert oder am Kolben (34) vorgesehen ist.

2. Vorrichtung nach Anspruch 1, **dadurch gekennzeichnet, dass** der Sauganschluss des Unterdruckerzeugers (44) mit dem Pneumatikraum (28) verbunden ist.

3. Vorrichtung nach einem der vorhergehenden Ansprüche, **dadurch gekennzeichnet, dass** der Druckanschluss des Unterdruckerzeugers (44) mit dem Druckraum (38) verbunden ist.

4. Vorrichtung nach einem der vorhergehenden Ansprüche, **dadurch gekennzeichnet, dass** der Abluftanschluss des Unterdruckerzeugers (44) mit einem in der Gehäusewand vorgesehenen Entlüftungsanschluss oder Druckluftanschluss (56) verbindbar ist.

5. Vorrichtung nach Anspruch 4, **dadurch gekennzeichnet, dass** durch die Verschiebung des Kolbens (34) im Gehäuse (14) die Verbindung zwischen Abluftanschluss des Unterdruckerzeugers (44) und Entlüftungsanschluss beziehungsweise Druckluftanschluss (56) trennbar ist.

6. Vorrichtung nach Anspruch 5, **dadurch gekennzeichnet, dass** die Verbindung dann getrennt ist, wenn der Kolben (34) seine inaktive, vom Werkstück (10) getrennte Stellung einnimmt.

7. Vorrichtung nach einem der Ansprüche 3 bis 6, **dadurch gekennzeichnet, dass** die Verbindungen von im Kolben (34) vorgesehenen Kanälen (50, 52 und 54) gebildet werden.

8. Vorrichtung nach Anspruch 7, **dadurch gekennzeichnet, dass** der Kolben (34) radiale und axiale Kanäle (50, 52 und 54) aufweist.

9. Vorrichtung nach einem der vorhergehenden Ansprüche, **dadurch gekennzeichnet, dass** der Unterdruckerzeuger (44) ein Ejektor (42) ist.

10. Vorrichtung nach Anspruch 9, **dadurch gekennzeichnet, dass** auf der dem Saugraum (30) zugewandten Seite des Kolbens (34) ein Magnet (58) angeordnet oder in den Kolben (34) integriert ist.

11. Vorrichtung nach einem der vorhergehenden Ansprüche, **dadurch gekennzeichnet, dass** der Kolben (34) wenigstens eine Radialdichtung (36) aufweist.

12. Vorrichtung nach einem der vorhergehenden Ansprüche, **dadurch gekennzeichnet, dass** der Kolben (34) auf seiner dem Saugraum (30) zugewandten Stirnfläche mit einer Axialdichtung (62) versehen ist.

## Claims

1. A device for tensioning and/or lifting work pieces (12), comprising an enclosed housing (14), a piston (34) that is movably supported within the housing (14), a first, pressure chamber (38) that is bordered by one end face of the piston (34) and the housing wall, and a second, pneumatics chamber (28) that is bordered by the other end face of the piston (34) and the housing wall, whereby the housing (14) has a sealing lip (24) that surrounds a suction chamber (30) on the side that is facing the work piece (12), and the suction chamber (30) is connected to the pneumatics chamber (28) by a flow channel (26), and whereby a vacuum generator (44) that is operated with compressed air is arranged within the housing (14), **characterized in that** the vacuum generator (44) is integrated within the piston (34) or is provided on the piston (34).

2. The device as recited in Claim 1, **characterized in that** the suction connection of the vacuum generator (44) is connected to the pneumatic chamber (28).

3. The device has recited in any of the preceding claims, **characterized in that** the pressure connection of the vacuum generator (44) is connected to the pressure chamber (38).

4. The device as recited in any of the preceding claims, **characterized in that** the exhaust air connection of the vacuum generator (44) is connected to a ventilation connection that is provided within the housing wall, or to a compressed air connection (56).

5. The device as recited in Claim 4, **characterized in that** the connection between the exhaust air connection of the vacuum generator (44) and the ventilation connection, or the compressed air connection (56), may be interrupted by a shifting of the piston (34) within the housing (14).

6. The device as recited in Claim 5, **characterized in that** the connection is interrupted when the piston (34) adopts its inactive position, in which it is separated from the work piece (12).

7. The device as recited in any of Claims 3 to 6, **characterized in that** the connections are formed by channels (50, 52, and 54) that are provided within the piston (34).

8. The device as recited in Claim 7, **characterized in that** the piston (34) has radial and axial channels (50, 52, and 54).

9. The device as recited in any of the preceding claims, **characterized in that** the vacuum generator (44) is an ejector (42).

10. The device as recited in Claim 9, **characterized in that** a magnet (58) is arranged on the side of the piston (34) that is facing the suction chamber (30), or it is integrated in the piston (34).

11. The device as recited in any of the preceding claims, **characterized in that** the piston (34) has at least one radial seal (36).

12. The device as recited in any of the preceding claims, **characterized in that** the piston (34) is provided with an axial seal (62) on its end face that is facing the suction chamber (30).

## Revendications

1. Dispositif de serrage et/ou de levage de pièces à usiner (12), comprenant un carter fermé (14), un piston (34) logé à déplacement dans ledit carter (14), une première chambre de pression (38) limitée par l'une des faces frontales du piston (34) et la paroi du carter ainsi qu'une deuxième chambre pneumatique (28) limitée par l'autre face frontale du piston (34) et la paroi du carter, ledit carter (34) présentant sur sa face montrant vers la pièce à usiner (12) une lèvre d'étanchéité (24) délimitant une chambre d'aspiration (30), et ladite chambre d'aspiration (30) communiquant avec ladite chambre pneumatique (28) via un canal d'écoulement (26), et un générateur de dépression (44) qui fonctionne au moyen d'air comprimé étant agencé à l'intérieur du carter (14), **caractérisé par le fait que** ledit générateur de dépression (44) est intégré audit piston (34) ou est prévu sur ledit piston (34).

2. Dispositif selon la revendication 1, **caractérisé par le fait que** le raccord d'aspiration du générateur de dépression (44) est relié à la chambre pneumatique (28).

3. Dispositif selon l'une quelconque des revendications précédentes, **caractérisé par le fait que** le raccord de pression du générateur de dépression (44) est relié à la chambre de pression (38).

4. Dispositif selon l'une quelconque des revendications précédentes, **caractérisé par le fait que** le raccord d'évacuation d'air du générateur de dépression (44) peut être relié à un raccord de purge ou raccord d'air comprimé (56) prévu dans la paroi du carter.

5. Dispositif selon la revendication 4, **caractérisé par le fait que** la liaison entre ledit raccord d'évacuation d'air du générateur de dépression (44) et ledit raccord de purge ou bien raccord d'air comprimé (56) peut être séparée en déplaçant le piston (34) à l'intérieur du carter (14).

6. Dispositif selon la revendication 5, **caractérisé par le fait que** la liaison est séparée lorsque le piston (34) occupe sa position inactive séparée de la pièce à usiner (12).

7. Dispositif selon l'une quelconque des revendications 3 à 6, **caractérisé par le fait que** les liaisons sont formées par des canaux (50, 52 et 54) prévus dans le piston (34).

8. Dispositif selon la revendication 7, **caractérisé par le fait que** ledit piston (34) présente des canaux radiaux et axiaux (50, 52 et 54).

9. Dispositif selon l'une quelconque des revendications précédentes, **caractérisé par le fait que** ledit générateur de dépression (44) est un éjecteur (42).

10. Dispositif selon la revendication 9, **caractérisé par le fait qu'**un aimant (58) est disposé sur la face du piston (34) qui montre vers la chambre d'aspiration (30) ou est intégré au piston (34).

11. Dispositif selon l'une quelconque des revendications précédentes, **caractérisé par le fait que** ledit piston (34) présente au moins un joint d'étanchéité radial (36).

12. Dispositif selon l'une quelconque des revendications précédentes, **caractérisé par le fait que**, sur sa face frontale montrant vers la chambre d'aspiration (30), ledit piston (34) est pourvu d'un joint d'étanchéité axial (62).
